# EUROPEAN PATENT APPLICATION

(11) **EP 1 434 126 A2**
(43) Date of publication of application: **30.06.2004**
(21) Application number: 03380305.7
(22) Date of filing: 23.12.2003
(51) Int. Cl.: G06F 9/00

(54) **Process for making a referee report and corresponding computer and program product**

(30) Priority: 27.12.2002 ES 200300061
(71) Applicant: Kinetical Business S.L., 08018 Barcelona (ES)
(72) Inventor: Carvajal Codina, Josep, 08328 Alella Barcelona (ES); Macias Sanchez, Gerardo, 08329 Teia Barcelona (ES)
(74) Representative: Curell Aguilà, Marcelino

(57) **Abstract**

Process for making a referee report and corresponding device. The process comprises monitoring and refereeing of a sporting event by a referee, who moves along the sports pitch during refereeing, and who makes annotations, in real time and in the sports pitch, of events which must be included in the report. The annotations are made in a computer, which stores the annotations in a memory. Once refereeing has been finalised, the computer reads the annotations from memory and structures said annotations in the form of a referee report. The device comprises a computer with a programme, a stopwatch, entry means on which annotations are made, allocating the time at which said annotations take place, storage means, and structuring means to structure the annotations in the form of a referee report.

## Description

### Field of the invention

This invention relates to a process for making a referee report in a sporting event which takes place in a sports pitch, comprising the monitoring and refereeing of said sporting event by a referee, in which the referee moves along the sports pitch during monitoring and refereeing, in which the referee makes annotations as to events which must be included in the report, in which the annotations are taken in real time and in the sports pitch during the referee's movements. The invention also relates to a device for making referee reports of sporting events which comprises a computer, said computer comprising a processor, a memory coupled to the processor and a programme stored in the memory and suitable for being executed by the computer.

### State of the art

In a vast array of sporting events, in particular those in which two or more players or teams play against each other, the presence of one or more referees is necessary. The referees must monitor the sporting event and referee it, taking a series of decisions which allow the sporting event to be brought to successful conclusion. These decisions, as well as other circumstances, are usually written down in a report which, duly signed by the parties involved, is handed to third parties (for example the tournament organisations, sporting federations, etc). During monitoring and refereeing, the referee must note down the decisions taken, and the time at which they were taken. Subsequently these annotations must be transcribed in the report. The tournament organisations (and/or the corresponding sporting federations) receive the reports of all the sporting events and they are transcribed totally or partially for later utilisation of the data contained in such (for example for all types of statistical treatment of the data received).

However, the entire procedure currently employed is slow, inefficient and ungainly.

### Summary of the invention

The objective of this invention is to overcome these drawbacks. This aim is achieved by means of a process for making a referee report such as indicated at the beginning of this specification, characterised in that: (a) the referee makes the annotations in a computer, (b) the computer stores the annotations in a memory, (c) once finalised the monitoring and refereeing, the computer reads the annotations from the memory and structures the annotations as a referee report.

In fact, in this manner several aspects with respect to the current form of making referee reports can be improved. In one respect, the annotations made during refereeing are made in a computer which can include various verification tasks (such as for example, verifying if it is the second yellow card shown to a football player, advising that the referee sends the player off). Additionally, these annotations are simplified since the computer can automatically assign the time at which the annotation is made. In another respect, these data are annotated only once. This has two advantages:
- on one hand it avoids unnecessary repetition of annotations made. The physical compilation of the hardcopy of the report (such as made conventionally) is rendered much more efficient since the data doesn't need to be transcribed from the annotations book to the report, but rather is already loaded in the computer's memory and ready to be printed in the corresponding format, so that a hardcopy of the report having the usual structure can be obtained automatically. Additionally, usually the information in the reports (or at least part of such information) is employed to obtain statistical data of all kinds for the tournament organisation, federation, etc. This usually obliges said organisation or federation to receive said report in hardcopy and transcribe the relevant data to its own information technology system. All of the above can now be carried out in an automatic manner since the data can be handed to said organisation or federation in computerised format.
- on the other hand, it avoids all the errors inherent in the fact of having to rewrite the same information repeatedly.

Another additional advantage is the possible suppression of the reports in hardcopy. Should the documents generated electronically be accepted by the organisation or federation, a reduction of physical documentation to be filed can be achieved, and greater simplicity in filing and handling. It should be taken into account, for example, that in Spain the football federations receive hundreds of thousands of reports each year.

In this specification the word computer means any electronic device which comprises at least a microprocessor with the appended devices necessary for correct functioning (memory, data entry and exit devices, communication buses, etc). The computer has to be able to execute a programme suitable for carrying out the process according to the invention. In general the computer can have any other feature which does not make it incompatible with the invention.

Preferably, the computer sends print signals to a printer by telematic means, advantageously through an infrared port or by means of bluetooth® technology. In this manner the installation of the equipment is simplified, since no connections need to be established between the computer and the printer.

Advantageously the referee annotates by means of selecting a given annotation from among a set of predetermined annotations. In fact, annotation is performed in real time and on the sports pitch, and thus must be as quick as possible to avoid time in which play stops or periods of play during which the referee is not monitoring the event. Additionally, the referee is also making a considerable physical effort. And in this sense, a large majority of annotations can normally be resumed in a relatively small number of "standard" annotations, which can be predefined. In this way the referee can make annotations in a very quick and clear manner. Preferably the selection is made by means of a touch screen arranged on the computer. This avoids the necessity of having to write or press predefined buttons. The touch screen can be personalised much more graphically, so that by means of suitable icons the referee immediately knows their meaning, without having to read instructions or having to remember predefined codes.

Preferably the process comprises a step in which data is received prior to the step of monitoring and refereeing. In fact, the referee report usually includes a series of information which is already known beforehand (date of the event, teams playing, place, referee team, etc.). These data can be received beforehand by the computer in said data receival step. Usually these data are sent by the organisation or federation. This data receival step can take place a significant time before the date and time of the sporting event (days, weeks or even months). In fact, there can even be modifications if data sent months before needs to be corrected a few days prior to the sporting event. Likewise there are other data which, although not included literally in the final report, by being included in the computer's memory allow the final report to be rendered in a much quicker manner. For example it is advantageous that in the data receival step all the players in a football team be included, together with all the data relevant to each one. From this list, the referee can very quickly mark which players are actually playing and who is in reserve.

Advantageously the process has a data preparation step prior to the monitoring and refereeing step. In fact, irrespective of the data receival step, there is a series of information which is not known until moments before the start of the sporting event. By means of this data preparation step information can be stored which in this manner is already directly available in the computer's memory, and can be directly employed in drawing up the final report.

Preferably the process includes a signature step, in which signatures are entered on a touch screen in the computer. In this manner, should it be necessary to have a signature before the drawing up of the final report, this signature can be made on the touch screen, and it is not necessary that the hardcopy be printed at this stage. In some cases the signature step is divided into various chronologically separate substeps (for example a first set of signatures at the beginning of the match, a second set of signatures at the end of the match and a third set of signatures when the report is finalised, etc.).

The invention likewise has as subject a device for making referee reports of sporting events such as indicated at the beginning of this specification characterised in that it comprises a stopwatch, entry means on which event annotations are made, in which said device allocates the time at which the annotations are made, storage means for storing said annotations in a memory, structuring means suitable for structuring said annotations in the form of a referee report.

Preferably the device has a touch screen, whose advantages have been set forth above. Advantageously the device includes a pen suitable for activating the touch screen. This allows the use of smaller screens and/or screens having more options than could be finger selected. This also allows the use of devices that are smaller and more comfortable to transport.

Preferably the device has a foldable keypad. In fact the referee will be the owner or at least in charge of the device, and will carry it with him in his movements. Even though only one part of the same (specifically the computer) is what the referee will carry onto the pitch and will accompany the referee during the monitoring and refereeing step, the other parts which form the device must be transported from the changing room to his house, to the federation, etc. It is therefore advantageous that they be small and easily transportable. For the same reason the device must be easy to put in working order. In this sense it is advantageous that the communications between the sundry components, in particular between the computer and the keypad, between the computer and printer (which it is likewise advantageous to include in the device), and between the computer and the mouse (should the device include one) be carried out by telematic means, i.e. without need for cables. For example communications can be by means of infrared or by means of bluetooth® technology. Another possible option is that the computer, as for example a handheld computer, can be directly connected to the keypad, in which the keypad already includes a connector capable of directly receiving the handheld computer. This type of connection technology is likewise very simple and suitable.

Preferably the printer includes a battery which allows printing in a self-sufficient manner, i.e. without needing a connection to a network for supply of electricity. This allows even greater self-sufficiency as concerns the environment where printing must be performed.

Advantageously the computer is a handheld computer. These computers can include touch screens and pens, communication through infrared ports, possibility of telematic communications by modem, Internet, or by means of GPRS connection devices. In addition they have sufficient resources (microprocessor, memory, etc.) to be able to support the programmes necessary for performing the process according to the invention. Their size is small and their pricing is affordable.

In general, the device according to the invention is capable of performing the process according to the invention.

It is also possible to prepare a computer programme product which can be directly loaded in the internal memory of a digital computer and which comprises programme codes suitable for executing the steps of the process according to the invention.

Likewise it is possible to prepare a computer programme product stored in a means utilisable by a computer, in which utilisable should be understood as readable, and which comprises a programme readable by a computer which comprises programme codes suitable for executing the steps of the process according to the invention.

### Brief description of the drawings

Other advantages and features of the invention can be appreciated from the following description, which relates, in an entirely non-limitative manner, a preferable embodiment of the invention with reference to the accompanying drawings. The figures show functional diagrams of the following steps:
Figure 1, data preparation step;
Figure 2, signature step;
Figure 3, monitoring and refereeing step, annotation of player related events;
Figure 4, monitoring and refereeing step, annotation of bench related events;
Figure 5, monitoring and refereeing step, annotation of events related with time of play;
Figure 6, annotation revision step;
Figure 7, step subsequent to match finalisation, annotation of player related events,
Figure 8, final annotation and report finalisation steps.

### Detailed description of an embodiment of the invention

Described below is a preferable embodiment of the invention, specifically for refereeing of football matches. The process and device according to the invention allow refereeing to be digitised in real time and allows making of a referee report in a much faster and error free manner. For such there is a pocket computer, also known usually as a handheld computer, "pocket PC", "Handheld" or "PDA", a foldaway touchpad, a printer and, optionally, a mouse. Communication between all these parts is carried out without cables, preferably through infrared ports or other equivalent solutions. In addition, the computer can communicate via modem, Internet or GPRS type connection devices, with other computers, such as for example the information technology systems of the relevant Football Federation, and in this manner all the equipment can be transported with ease, its installation and use not requiring the connection of cabling, and above all, the computer can be carried by the referee during the match, since its weight and dimensions allow, for example that it be carried handing from the belt. The computer has a touch screen and a pen by means of which any of the options present on screen can be selected and even hand-written annotations and/or signatures can be registered.

Refereeing comprises in general two large blocks of activity. A first block is that corresponding to each match, which in turn must be differentiated between a step prior to the match, the match properly speaking and a step subsequent to the match. The second block includes a whole series of management activities which are usually general to a plurality of matches, such as for instance the calendar for the season, registration and deregistration of matches, referees, clubs and/or players.

During the management block the computer in possession of a given referee receives data corresponding to the matches to be refereed by that referee in particular, such as for example dates, clubs, club data (teams and staff, technicians, etc.) fellow officials who will work with the person in charge of the computer in each match, etc. This step of data receival is logically prior to the block corresponding to each match.

As concerns the first block, this is divided into three parts, as pointed out above: a first part which comprises a data preparation step, a second step which is the match monitoring and refereeing step, and a third step which is a post-match step including the drawing up of a referee report.

During the data preparation step the referee can verify if the information received from the Federation is correct (category, date, time and place of the match, home team, visiting team and referee team). Should it be necessary required modifications can be introduced. Thereafter the list of players called for the home team should be verified. Then the players who are actually playing can be selected from among the players called and the non-selected players are thus left as reserve players on the bench. The referee can also select the home team technicians, from among the list of all those persons related with the home team which has been supplied by the Federation during the management step. The same can be carried out for the visiting team. Then the captains of the teams and the respective trainers sign the report. This is carried out directly on the computer touch screen. These signatures and the data introduced are thus memorised by the computer for subsequent use in drawing up the report.

During the monitoring and refereeing step the referee carries the handheld computer at all times, and makes all the annotations corresponding to events (goals, cards shown, etc.) in real time and on the pitch. To facilitate this responsibility, the computer will consistently present a series of options on the touch screen thereof which will always include all the options which the referee may need at any time. In this manner, and using the pen, the referee can note any event very rapidly. The computer will include in each annotation the corresponding time.

At the beginning of the match the referee notes the team responsible for beginning the match and will start the stopwatch. From this moment on the referee can introduce any annotation by choosing the corresponding icon. Annotations to be made are: yellow card, red card, player substitution and goal. In all cases complementary annotations can be added, such as for example the player concerned by the annotation, the reason (in the event of cards shown) the new player (in the event of substitutions), etc.

Once the match has come to an end the device will still allow the referee to introduce annotations, such as for example yellow cards, red cards, substitutions and goals. In this case the computer will request that the referee also introduce the time of the match at which the annotation is considered to have taken place.

Finally, to complete the information which subsequently will be reflected in the report, the referee may introduce a series of additional information, such as remarks and expansions as to certain annotations made previously, comments as to managers and technicians, in particular as to attitude, comments as to the playing field, the spectators, etc. These comments can be selected from a series of predetermined comments and/or can be introduced by hand by the referee, for example by means of the foldaway keypad.

Once all the foregoing operations have been performed the report can be printed out and the report data can be sent telematically to the Federation.

The report, once completed, is signed by the team representatives and by the referee. This second substep for signatures can be done on the printed report (and which will include the signatures of the captains and the trainers which were affixed by means of the touch screen), or can also be made electronically by means of the touch screen. Should the latter be the case, the Federation can electronically receive a copy of the report which includes all the signatures. However it is probable that this method of signing the report will only slowly and progressively be accepted by the different organisations concerned. It should therefore be emphasised that the process and the device according to the invention are compatible with different levels of acceptation as to affixation of signatures by means of the touch screen. Thus, for example:
- should signing by means of the touch screen not be accepted under any circumstances: the referee prepares the contents of the report by means of the computer and makes a first print out of the report, which is signed in hardcopy by the captains and the trainers. When the match is over and after having introduced into the computer all the remaining report data, the report signed by the captains and the trainers is placed in the printer so that the remaining data can be completed. Finally the report is signed by the representatives and the referee.
- should signature by means of the touch screen be accepted for the captains and the trainers but not for the representatives and/or the referee, the captains' and trainers' signatures can be affixed by means of the touch screen (so that it is not necessary to make a first printout of the report). At the end of the match and when the report is completed, it is printed out and signed by the representatives and/or the referee.
- should signing by means of the touch screen be fully accepted it is possible, if all participants agree and have the necessary technical resources, to do away with the hardcopy of the report. A copy can be sent telematically, including all required signatures.

Logically the device can be configured in a personalised manner. Among the configuration data can be those of the owner or person to whom the device has been entrusted (i.e. the referee who uses the device) and other information technology type data such as terminal number (used in communications with the Federation), configuration of the printer which will be used, types of telematic communications which will be maintained, etc.

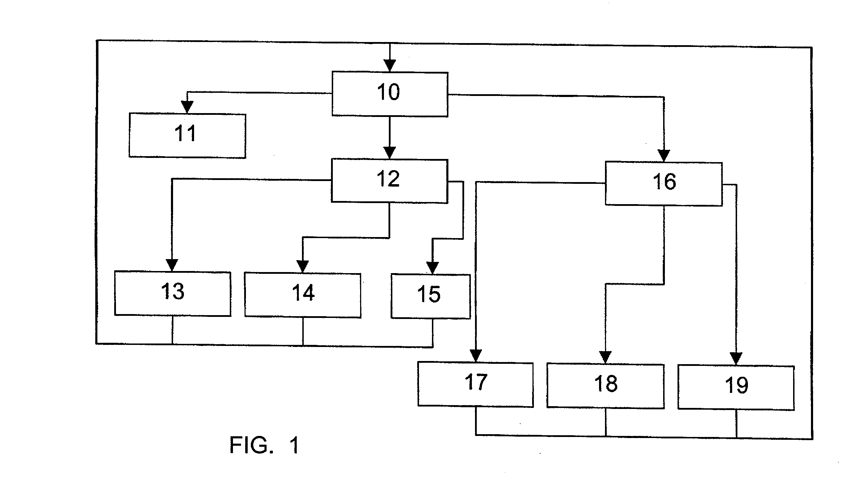

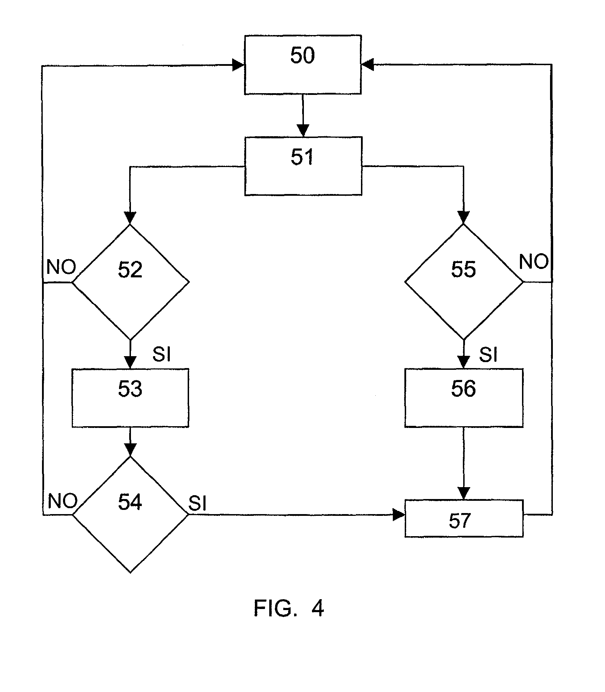

Figures 1 to 8 show flow diagrams representing an embodiment of the process according to the invention.

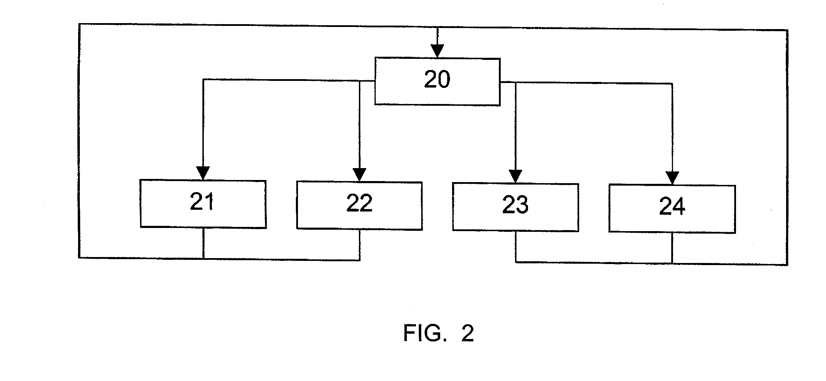

Figures 1 and 2 show the step corresponding to the preparation of data prior to the monitoring and refereeing step. In move 10 the referee selects the match that he will referee. In move 11 the referee can verify the basic data for the game, such as the date, the time, the place, the teams, etc. In move 12 the home team can be selected so that in move 13 the players actually playing can be marked, in move 14 the reserve players can be verified and in move 15 the home team technicians for the game can be selected. In move 16 the visiting team can be selected and in a similar manner the players actually playing (move 17) reserve players (move 18) and technicians (move 19) for the visiting team. In move 20 the process of signing the report prior to start of the match is initiated. In move 21 the home captain signs, in move 22 the home trainer signs and in moves 23 and 24 the visiting captain and the trainer sign, respectively.

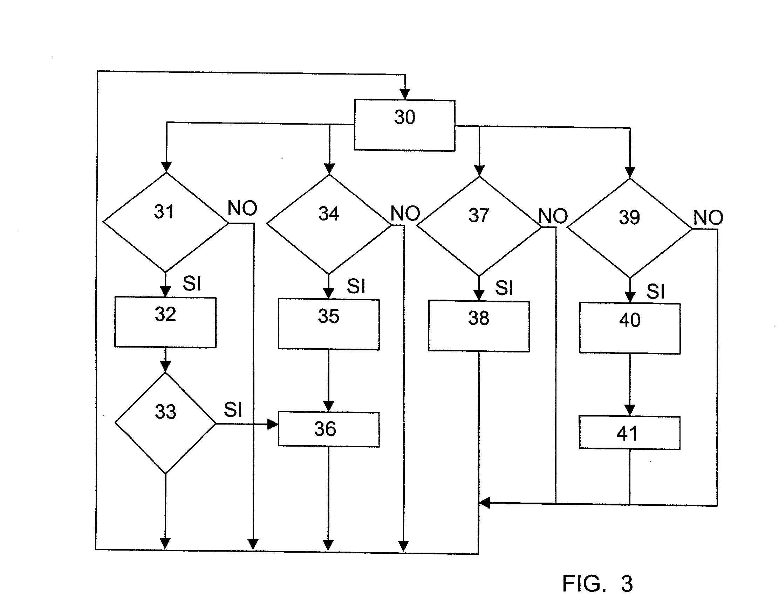

In figures 3, 4 and 5 the process to follow during the monitoring and refereeing step is shown. Should one wish to note an event concerning a player in particular, firstly the player in question is selected in move 30. Next the annotation to be entered must be selected. If it is a yellow card (move 31) the reason must subsequently be noted (move 32) and the computer will verify if it is the second yellow card shown to the same player or not (move 33). If the annotation is directly a red card (move 34) the reason must likewise be noted (move 35) and the sending off of the player (move 36) must also be noted. In the event of a second yellow card the player will also be sent off. If the annotation is a goal (move 37) the updated result will be entered (move 38). Finally if a substitution must be noted (move 39) the substitute chosen from among the available reserve players must be noted (move 40). In move 41 this substitution will be confirmed. It is also possible that events related with the bench (move 50) need to be noted. In this case the player concerned must be corrected (move 51). In this specific instance only two types of annotation have any sense: yellow card (move 52) or red card (move 55). In both cases the motive will be given, moves 53 and 56 respectively. If the annotation was a yellow card, the computer will check if it is the second yellow card or not. If it is the second yellow card the player must be sent off (move 57) similarly as in the case of showing a red card directly.

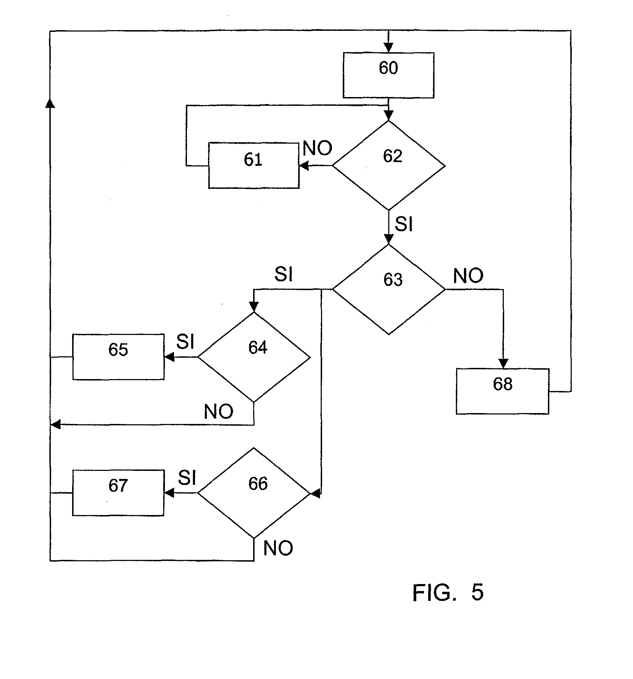

The general progression of the sporting event is controlled as shown in figure 5. At the beginning of the match the stopwatch option is selected (move 60). At kick-off (move 61) timing is started (move 63). From this moment on the referee can break (move 66) or decide that a half or a period of play is over (move 64). If he breaks the game the stopwatch is halted (move 67) but the same period continues when the stopwatch is restarted. When a period of play is over, it is noted as ended.

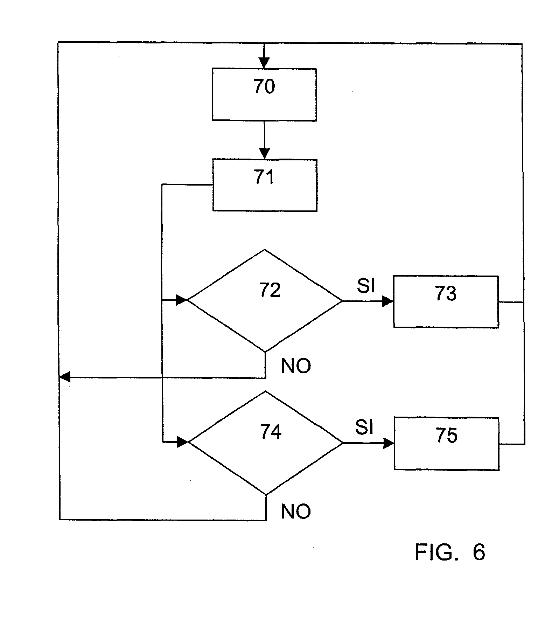

The device includes an option for revision of annotations made (see figure 6). To revise an annotation the annotation selection option must be chosen (move 70). The list of annotations made is shown (move 71), and the option to delete an annotation can be chosen (moves 72 and 73) or modify an annotation (moves 74 and 75).

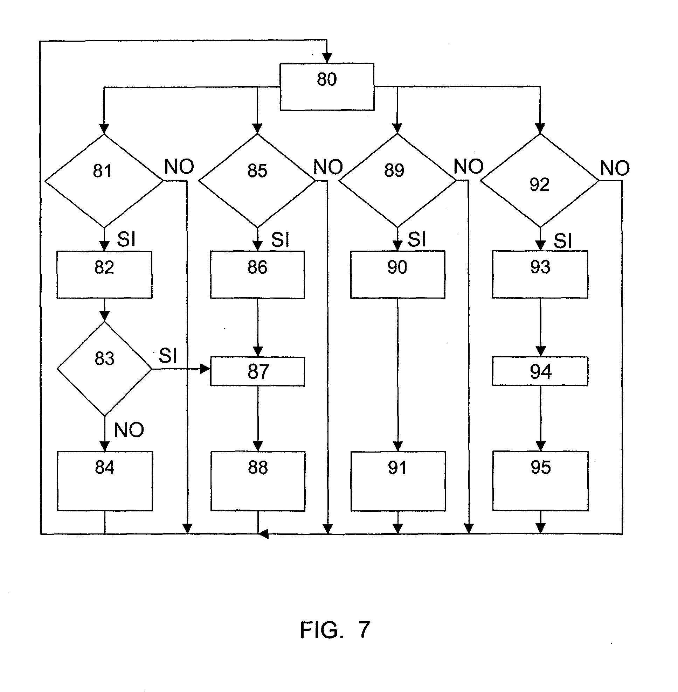

Once the match is over, the referee has the possibility of making additional annotations (figure 7). These annotations are made in a manner similar to those described above in relation to figure 3. The only difference is in moves 84, 88, 91 and 95, corresponding to the moves for manual time entry (the match time) in which the annotation is considered to have taken place. In fact, since it is an annotation made once the match is over, the time cannot be automatically allocated, since the stopwatch has been halted. It is therefore necessary to manually annotate this data.

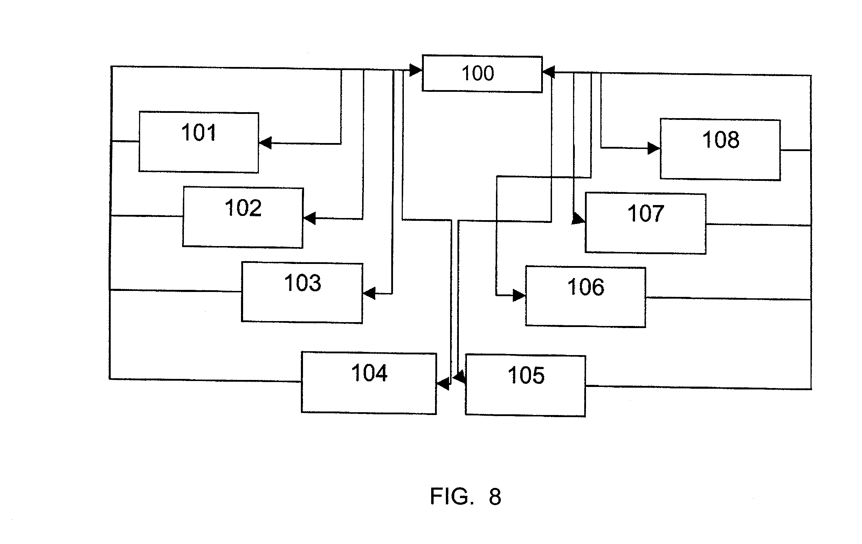

Figure 8 shows the final steps of the process for making the referee report. There is a possibility that the referee note other events (move 101), that he enter annotations as to the managers and/or technicians of the teams playing (move 102), that he enter annotations as to the spectators (move 103), the playing field (move 105) or that he expand the annotations and/or make general remarks. Finally the referee can produce the report (move 106). This report can be printed out on paper if one wishes to have a hardcopy, or if one wishes the report to be signed in hardcopy, and can be sent telematically (move 108) to any interested parties (tournament organisation, sporting federation, competing clubs, etc.). The report can be sent telematically in its final definitive structure or only the annotated data can be sent, if the recipient does not require the structure of the definitive report.

Preferably the report is sent by mobile communication means (such as for example GPRS or UMTS), which simplifies its emission and does not require electric connections, nor requires that the premises in which the report is drawn up have special wiring arrangements. Advantageously security methods are employed to guarantee the contents and authenticity of the emission (for example by means of data coding techniques, electronic signature, etc.).

The following is a list of all the reference numbers employed in the figures, with their corresponding meaning:
- 10.: Match selection
- 11.: Game data
- 12.: Home team
- 13.: Selection of players actually playing
- 14.: Selection of reserve players
- 15.: Selection of technicians
- 16.: Visiting team
- 17.: Selection of players actually playing
- 18.: Selection of reserve players
- 19.: Selection of technicians
- 20.: Selection of signatures
- 21.: Home captain
- 22.: Home trainer
- 23.: Visiting captain
- 24.: Visiting trainer
- 30.: Selection of player
- 31.: Yellow card
- 32.: Selection of reason
- 33.: Second yellow card
- 34.: Red card
- 35.: Selection of reason
- 36.: Sending off
- 37.: Goal
- 38.: Update score
- 39.: Substitution
- 40.: Selection of substitute player
- 41.: Confirm
- 50.: Selection of bench
- 51.: Selection of player
- 52.: Yellow card
- 53.: Selection of reason
- 54.: Second yellow card
- 55.: Red card
- 56.: Selection of reason
- 57.: Sending off
- 60.: Selection of stopwatch
- 61.: Kick-off
- 62.: Kick-off established
- 63.: Stopwatch started
- 64.: Period end
- 65.: End period
- 66.: Break in play
- 67.: Halt stopwatch
- 68.: Start period
- 70.: Selection of annotations
- 71.: List of annotations
- 72.: Delete annotation
- 73.: Delete annotation
- 74.: Modify annotation
- 75.: Modify annotation
- 80.: Selection of player
- 81.: Yellow card
- 82.: Selection of reason
- 83.: Second yellow card
- 84.: Manual selection of time
- 85.: Red card
- 86.: Selection of reason
- 87.: Sending off
- 88.: Manual selection of time
- 89.: Goal
- 90.: Update score
- 91.: Manual selection of time
- 92.: Substitution
- 93.: Selection of substitute player
- 94.: Confirm
- 95.: Manual selection of time
- 100.: xReport
- 101.: Other events
- 102.: Managers, Technicians
- 103.: Spectators
- 104.: Remarks, Expanding on annotations
- 105.: Sports pitch
- 106.: Produce report
- 107.: List annotations
- 108.: Send data

Referee reports are usually drawn up in a great range of formats, depending on the organisation responsible for the tournament, the tournament concerned, the category of the tournament, etc. However there is a series of information common to the majority of such. The most usual information as concerns referee reports for football matches is given below:
- season (year)
- championship
- date of the report
- place of sporting event
- name and locality of the clubs playing
- name and surname of the referee and his assistants
- name and surname of the players, substitutes and technicians for each team, possibly including identification data such as the national identity document number, the federation licence number, etc.
- goals made by each player
- time of start of match (first half)
- time of start of second half
- result at the end of each half
- signatures of the captains, trainers, representatives, etc., with names and surnames and possibly other identification data such as the national identity document number, the federation licence number, etc.
- signature of the referee, with date of signature, name and surname of the referee and possibly other identification data
- player substitutions, with name and surname (of both the substitute player and player leaving the game) and of the match time at which substitution was made
- admonitions of players
- sending off of players
- finally there is usually a series of spaces for making annotations of a more general nature as to players, managers and technicians, spectators, sports pitch, installations and even spaces for annotation of remarks in general.

As can be seen there is a significant amount of information which can be completed with information available before the match and which, for example, can be received in the data receival step (date of match, teams and localities, year, championship, referee and assistants' information, etc.). Another important quantity of information can be completed automatically by means of the annotations made during the monitoring and refereeing step (for example, player who made each goal and time goal was made, time at which substitution was made and players involved, player who receives admonition and time at which such took place, etc.). As can also be seen the data preparation step can be very much faster if the device already contains the name, surname and other identification data of the players and technicians, and only the players actually playing and the substitutes need to be marked from among all the players on the squad.

One will note that practically the entire referee report can be automatically completed at the end of the monitoring and refereeing step. This reduces the amount of work which the referee needs to do at the end of the match, and avoids repetition of numerous annotations, with a consequent reduction in time needed and a reduction in transcription errors.

## Claims

1. Process for making a referee report of a sporting event which takes places in a sports pitch, comprising the monitoring and refereeing of said sporting event by a referee, in which said referee moves along said sports pitch during said monitoring and refereeing, in which said referee makes annotations of events which must be included in said report, in which said annotations are taken in real time and in the sports pitch during said movements, **characterised in that**: (a) said referee makes said annotations in a computer, (b) said computer stores said annotations in memory, (c) once said monitoring and refereeing is finalised, said computer reads said annotations from said memory and structures said annotations in the form of a referee report.

2. Process according to claim 1, **characterised in that** said computer sends printing signals to a printer by telematic means.

3. Process according to claim 2, **characterised in that** said telematic means are via an infrared port or by means of bluetooth® technology.

4. Process according to any of claims 1 to 3, **characterised in that** said referee makes said annotations by selecting a given annotation from a set of predefined annotations.

5. Process according to claim 4, **characterised in that** said selection is made by means of a touch screen arranged in said computer.

6. Process according to any of claims 1 to 5, **characterised in that** it comprises a data receival step prior to said monitoring and refereeing step.

7. Process according to any of claims 1 to 6, **characterised in that** it comprises a data preparation step prior to said monitoring and refereeing step.

8. Process according to any of claims 1 to 7, **characterised in that** it comprises a signature affixation step, in which said signatures are signed on a touch screen of said computer.

9. Device for making referee reports of sporting events which comprises a computer, said computer comprising a processor, a memory coupled to said processor and a programme stored in said memory and suitable for being executed by said computer, **characterised in that** it comprises a stopwatch, entry means on which annotations of events are made, wherein said device allocates the time at which the annotations are made, storage means for storing said annotations in a memory, structuring means suitable for structuring said annotations in the form of a referee report.

10. Device according to claim 9, **characterised in that** it comprises a touch screen.

11. Device according to claim 10, **characterised in that** it comprises a pen suitable for activating said touch screen.

12. Device according to any of claims 9 to 11, **characterised in that** it comprises a foldable keypad.

13. Device according to claim 12, **characterised in that** said foldable keypad is connected to said computer by telematic means.

14. Device according to claim 13, **characterised in that** said telematic means are via an infrared port or by means of bluetooth® technology.

15. Device according to any of claims 9 to 14, **characterised in that** it comprises a printer.

16. Device according to claim 15, **characterised in that** said printer is connected to said computer by telematic means.

17. Device according to claim 16, **characterised in that** said telematic means are via an infrared port or by means of bluetooth® technology.

18. Device according to any of claims 9 to 17, **characterised in that** said computer is a handheld computer.

19. Computer programme product stored in a means utilisable by a computer and which comprises a programme readable by a computer which comprises programme codes suitable for executing the steps of the process according to any of claims 1 to 8.

20. Computer programme product which can be directly loaded in the internal memory of a digital computer and which comprises programme codes suitable for executing the steps of the process according to any of claims 1 to 8.
